Europäisches Patentamt

European Patent Office

Office européen des brevets

(19)

(11) Veröffentlichungsnummer: **0 115 575**
**B1**

(12)
# EUROPÄISCHE PATENTSCHRIFT

(45) Veröffentlichungstag der Patentschrift: **16.08.90**

(51) Int. Cl.⁵: **G 12 B 11/00**, B 60 K 35/00

(21) Anmeldenummer: **83111056.4**

(22) Anmeldetag: **05.11.83**

(54) Anzeigevorrichtung in Kraftfahrzeugen.

(30) Priorität: **08.12.82 DE 3245299**

(43) Veröffentlichungstag der Anmeldung:
**15.08.84 Patentblatt 84/33**

(45) Bekanntmachung des Hinweises auf die
Patenterteilung:
**16.08.90 Patentblatt 90/33**

(84) Benannte Vertragsstaaten:
**DE FR GB IT**

(56) Entgegenhaltungen:
**DE-A-2 749 767**

(73) Patentinhaber: **ROBERT BOSCH GMBH**
**Postfach 50**
**D-7000 Stuttgart 1 (DE)**

(72) Erfinder: **Ziegler, Wolfgang, Dr.**
**Philipp-Reis-Strasse 52**
**D-8510 Fürth (DE)**
Erfinder: **Knoll, Peter, Dr.**
**Albert-Schweitzer-Strasse 9**
**D-7505 Ettlingen (DE)**

## Beschreibung

### Stand der Technik

Die Erfindung geht aus von einer Anzeigevorrichtung für Kraftfahrzeuge nach der Gattung des unabhängigen Anspruchs. Bei bekannten Anzeigevorrichtungen dieser Art wird zur Steuerung der Helligkeit der Anzeige ein Fotodetektor verwendet, der in der Ebene der Anzeigeeinheit liegt. Die Schaltung zur Steuerung der Helligkeit ist dabei so ausgelegt, daß sich die Ansteuerspannung bzw. der Ansteuerstrom für die Helligkeit der Anzeige proportional zur Beleuchtungsstärke des auf die Anzeigevorrichtung von außen auffallenden Lichtes ändert.

Auf diese Weise kann z.B. bei aktiven Vakuum-Fluoreszenz-Display (VFD)-Anzeigen die Gitterspannung zur Steuerung der Helligkeit geändert werden und bei quasiaktiven Anzeigelementen wie beispielsweise LCD-Anzeigen kann der Lampenstrom einer direkten oder indirekten Beleuchtung der Anzeige in entsprechender Weise geändert werden. Diese Lösungen arbeiten bei unkritischen Beleuchtungssituationen, wie beispielsweise bei Dunkelheit, bei bedecktem Himmel oder bei hochstehender Sonne zufriedenstellend. Die Beleuchtungssteuerung versagt dagegen bei Beleuchtungssituationen, bei denen die Umfeldhelligkeit vor und hinter dem Kraftfahrzeug in starkem Maße unterschiedlich ist. Solche Situationen treten beispielsweise bei Tunneleinfahrten oder -ausfahrten, bei tief vor dem Kraftfahrzeug stehender Sonne oder bei Schlechtwetterfronten auf. Die Ursache für das Versagen der Beleuchtungssteuerung in solchen Situationen liegt darin, daß durch die Steuerung der Anzeigehelligkeit nur die Änderung des Kontrastes der Anzeige kompensiert wird, die sich durch die Änderung des von außen auf die Anzeige fallenden Lichtes ergibt. Der Adaptationszustand der Augen des Fahrers bleibt jedoch unberücksichtigt. Die Sehleistung bzw. die Unterschiedsempfindlichkeit des menschlichen Auges ist jedoch in starkem Maße von dem Adaptationszustand des Auges abhängig, wobei der Adaptationszustand im wesentlichen durch die Helligkeit im Sichtfeld des Fahrers vor dem Fahrzeug bestimmt wird.

Mit der vorliegenden Lösung wird angestrebt, die Helligkeit der Anzeige nicht nur abhängig von dem aus dem Beobachtungsraum auf die Anzeige fallenden Lichtes zu steuern sondern dabei den Adaptationszustand der Augen des Fahrzeuglenkers mit zu berücksichtigen.

### Vorteile der Erfindung

Die erfindungsgemäße Anzeigevorrichtung mit den kennzeichnenden Merkmalen des Anspruchs 1 hat den Vorteil, daß die für den Adaptationszustand der Augen des Fahrzeuglenkers maßgebende Helligkeit des Umfeldes vor dem Fahrzeug mit zur Steuerung der Helligkeit der Anzeige beiträgt, so daß auch in kritischen Situationen unterschiedlicher Helligkeit im Umfeld vor und hinter dem Kraftfahrzeug das Ablesen der Anzeige nicht beeinträchtigt wird. Als weiterer Vorteil ist anzusehen, daß die vom Adaptationszustand des Fahrers abhängige Ablesbarkeit der Anzeige praktisch konstant gehalten werden kann. Außerdem läßt sich eine vorhandene Helligkeitssteuerung ohne zusätzlichen Schaltungsaufwand erfindungsgemäß ergänzen.

Durch die in den abhängigen Ansprüchen aufgeführten Maßnahmen sind vorteilhafte Weiterbildungen und Verbesserungen der im Hauptanspruch angegebenen Merkmale möglich. Dabei ist es besonders vorteilhaft, wenn ein einziger Fotodetektor über Lichtleiter sowohl das vom Beobachtungsraum auf die Anzeige fallende Licht als auch das vom Umfeld vor dem Fahrzeug in Richtung des Fahrers einfallende Licht erfaßt.

Ausführungsbeispiele der Erfindung sind in der Zeichnung dargestellt und in der nachfolgenden Beschreibung näher erläutert. Es zeigen Figur 1 das Armaturenbrett eines Kraftfahrzeuges in schematischer Darstellung mit einer Helligkeitssteuerung der Anzeige mittels eines Fotodetektors, Figur 2 einen Fotodetektor zur Helligkeitssteuerung mit einem stabförmigen Lichtleiter und Figur 3 zeigt einen auf einem Fotodetektor angeordneten Lichtleiter mit Jalousiefolien.

### Beschreibung der Ausführungsbeispiele

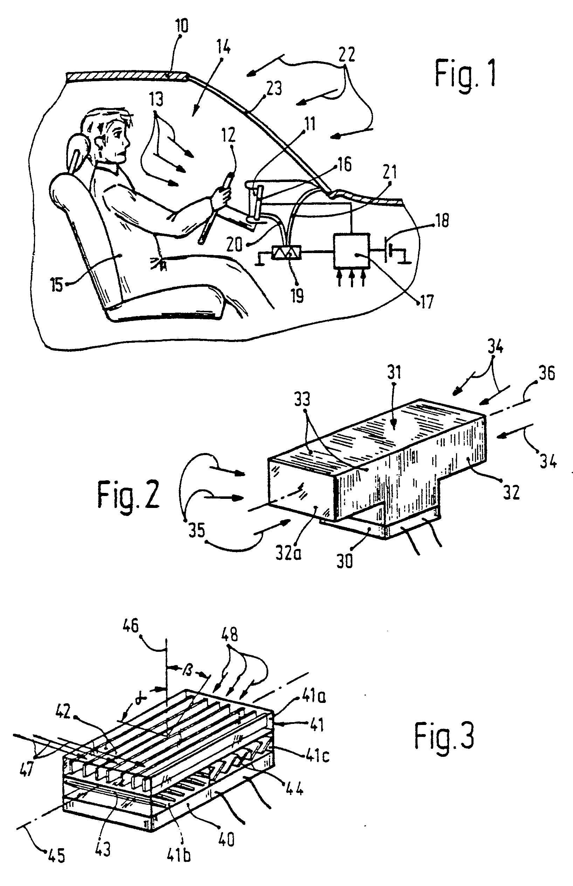

Figur 1 zeigt in schematischer Darstellung den Fahrerraum eines Kraftfahrzeuges 10 mit einem Armaturenbrett 11, welches hinter oder unmittelbar neben dem Lenkrad 12 des Kraftfahrzeuges 10 angeordnet ist.

In Richtung der Pfeile 13 fällt dabei Licht aus dem Beobachtungsraum 14 eines Fahrers 15 auf eine Anzeige 16 des Armaturenbrettes 11. Im Beispielsfall besteht die Anzeige 16 aus einem Vakuum-Fluoreszenz-Display (VFD), bei dem die Helligkeit der einzelnen Displayelemente durch ihre Gitterspannung zu beeinflussen ist. Die Anzeige 16 ist dabei mit einer elektrischen Steuerschaltung 17 verbunden. Die Steuerschaltung 17 ist an einer Akkumulatorbatterie 18 des Kraftfahrzeuges 10 angeschlossen. Außerdem werden ihr verschiedene Meßdaten von nicht dargestellten Sensoren im Kraftfahrzeug übermittelt, die in der elektrischen Steuerschaltung 17 ausgewertet und auf die Anzeige 16 gegeben werden.

Das vom Beobachtungsraum 14 in Pfeilrichtung 13 auf die Anzeige 16 fallende Licht wird durch einen Fotodetektor 19 erfaßt, indem die Beleuchtungsstärke auf der Anzeige 16 über einen Lichtleiter 20 von dem Fotodetektor 19 erfaßt wird. Das vom Fotodetektor 19 abgegebene elektrische Signal wird auf die elektrische Steuerschaltung 17 gegeben und die Helligkeit der Displayelemente auf der Anzeige 16 wird in Abhängigkeit von diesem Signal gesteuert. Da die Sehleistung des menschlichen Auges in starkem Maße von dem Adaptationszustand des Auges abhängt, und da der Adaptationszustand der Augen des Fahrers 15 im wesentlichen von den Lichtverhältnissen vor dem Fahrzeug 10, also in Blickrichtung des Fahrers 15 abhängt, ist es erforderlich, daß der Fotodetektor 19 auch die Leuchtdichte des Umfeldes in Blickrichtung des Fahrers 15 mit erfaßt und dementsprechend die Helligkeit der Anzeige 16 über die Steuerschaltung 17 nachführt. Zu diesem Zweck ist ein weiterer Lichtleiter 21 vorgesehen, der das in Richtung der Pfeile 22 von vorn auf die Augen des Fahrers 15 einwirkende Licht erfaßt. Der Lichtleiter 21 ist mit seinem vorderen Ende unmittelbar hinter der Windschutzscheibe 23 des Kraftfahrzeuges 10 angeordnet und er ist mit seinem anderen Ende an der lichtempfindlichen Fläche des Fotodetektors 19 mit dem Ende des anderen Lichtleiters 20 zusammengeführt. Auf diese Weise erfaßt der Fotodetektor 19 über die Lichtleiter 20 und 21 sowohl das vom Beobachtungsraum 14 in Richtung der Anzeige 16 einfallende Licht als auch das vom Umfeld vor dem Fahrzeug 10 in Richtung des Fahrers 15 einfallende Licht.

Der Kontrast zwischen der Helligkeit der Displayelemente und den benachbarten Bereichen der Anzeige 16 hängt bei konstanter Gitterspannung der Displayelemente von dem auf die Anzeige 16 fallenden Licht und dessen Reflexion ab. Dieses Licht wird über den Lichtleiter 20 vom Fotodetektor 19 erfaßt und bei einer sich ändernden Beleuchtungsstärke auf der Anzeige 16 wird die damit eintretende Kontraständerung der Anzeige 16 über die Steuerschaltung 17 kompensiert. Außerdem wird das von vorn, im Sichtfeld des Fahrers einfallende Licht vom Fotodetektor 19 über den Lichtleiter 21 erfaßt und die Helligkeit der Anzeige wird dadurch so gesteuert, daß die Ablesbarkeit der Anzeige bei sich ändernder Leuchtdichte im Umfeld vor dem Fahrzeug und bei sich dadurch änderndem Adaptationszustand des Fahrers möglichst konstant gehalten wird. Dadurch ist sichergestellt, daß beispielsweise bei Tunneleinfahrten bzw. -ausfahrten oder bei tiefstehender Sonne bzw. bei Schlechtwetterfronten unterschiedliche Leuchtdichten im Umfeld vor und hinter dem Kraftfahrzeug erfaßt und die Helligkeit der Anzeige 16 so nachgeführt wird, daß die Anzeige 16 vom Fahrer 15 jederzeit gut ablesbar ist.

Im Ausführungsbeispiel nach Figur 2 ist ein Fotodetektor 30 an seiner lichtempfindlichen Fläche von einem Lichtleiter 31 aus Milchplexiglas abgedeckt, der einen stabförmigen Abschnitt 32 hat. Der Fotodetektor 30 mit dem Lichtleiter 31 ist im Bereich der Armaturenabdeckung eines Kraftfahrzeuges hinter dessen Windschutzscheibe anzuordnen, wobei der stabförmige Abschnitt 32 in Achsrichtung 36 des Kraftfahrzeuges auszurichten ist. Der Lichtleiter 31 ist mit Ausnahme seiner auf dem Fotodetektor 30 aufliegenden Fläche und der beiden Stirnflächen 32a des stabförmigen Abschnittes 32 gegen Lichteinfall dadurch geschützt, daß seine Deckflächen 33 schwarz eingefärbt sind. An der hinteren, zum Fahrer hin ausgerichteten, nicht erkennbaren Stirnfläche des stabförmigen Abschnittes 32 wird das in Richtung der Pfeile 34 aus dem Beobachtungsraum vor dem Armaturenbrett auf die Anzeige fallende Licht erfaßt und mit der vorderen Stirnfläche 32a des Lichtleiters 31 wird das in Richtung der Pfeile 35 von vorn durch die Windschutzscheibe auf die Augen des Fahrers einwirkende Licht erfaßt. Das von vorn und von hinten auf die Stirnflächen 32a des Lichtleiters 31 auftreffende und von dort auf den Detektor 30 gelangende Licht verursacht ein Signal proportional zur Beleuchtungsstärke auf den Stirnflächen 32a, wenn für den Lichtleiter 31 ein leicht eingetrübtes transparentes Material verwendet wird. Die Beleuchtungsstärke an der vorderen und hinteren Stirnfläche 32a ist dabei ein Maß für die Helligkeit des Umfeldes vor und hinter dem Kraftfahrzeug unter Einbeziehung der geometrischen Gegebenheiten des Fahrgastraumes. Die Gewichtung der Helligkeit vor dem Fahrzeug und der Helligkeit im bzw. hinter dem Fahrzeug bezüglich der Steuerung der Helligkeit der Anzeige kann durch eine geometrische Änderung des stabförmigen Abschnittes 32, beispielsweise durch unterschiedlich große Stirnflächen 32a beeinflußt werden. Eine solche Beeinflussung ist auch nach dem Einbau des Lichtleiters 31 im Kraftfahrzeug durch eine teilweise Abdeckung oder Einfärbung der hinteren oder vorderen Stirnfläche 32a möglich.

In Figur 3 ist als weiteres Ausführungsbeispiel ein Fotodetektor 40 dargestellt, dessen lichtempfindliche Fläche von der Unterseite eines stabförmigen Lichtleiters 41 abgedeckt ist. Der Lichtleiter 41 ist in Achsrichtung des Fahrzeuges horizontal hinter der Windschutzscheibe, vorzugsweise im Bereich der Armaturenabdeckung angeordnet. Der Lichtleiter 41 besteht aus drei Jalousiefolien 41a, 41b, 41c, deren Lamellen 42, 43, 44 nur solches Licht zum Fotodetektor 40 durchlassen, welches von oben gesehen unter einem Winkel α bzw. β ± 10° nach vorn bzw. nach hinten geneigt auf den Lichtleiter 41 auftrifft. Die obere Hälfte des Lichtleiters 41 bildet die Jalousiefolie 41a, deren senkrechte Lamellen 42 parallel zur Fahrzeuglängsachse angeordnet sind. In der unteren Hälfte des stabförmigen Lichtleiters 41 ist im vorderen Bereich eine Jalousiefolie 41b angeordnet, deren Lamellen 43 quer zur Richtung der Achse 45 verlaufen und die aus der Senkrechten 46 unter einem Winkel α nach vorn geneigt sind. Im hinteren Bereich der unteren Hälfte des Lichtleiters 41 ist eine Jalousiefolie 41c angeordnet, deren Lamellen 44 ebenfalls quer zur Achse 45 des Lichtleiters 41 verlaufen und die unter einem Winkel β aus der Senkrechten 46 nach hinten geneigt sind. Durch diese Ausbildung des Lichtleiters 41 soll erreicht werden, daß nur Licht aus bestimmten Richtungsbereichen aus dem Umfeld vor und hinter dem Fahrzeug auf den Fotodetektor 40 gelangt. So kann beispielsweise aus dem Umfeld vor dem Fahrzeug nur solches Licht auf den Fotodetektor 40 gelangen, welches in etwa unter einem Winkel α ± 10° in Richtung der Pfeile 47 aus der Senkrechten 46 nach vorn geneigt auf den Lichtleiter 41 auftrifft. Aus dem Beobachtungsraum des Fahrers und dem Umfeld hinter dem Fahrzeug kann dagegen nur solches Licht auf den Fotodetektor 40 fallen, welches in etwa in Richtung der Pfeile 48 unter einem Winkel β ± 10° aus der Senkrechten nach hinten geneigt auf dem Lichtleiter 41 auftrifft. Auch hier kann eine Gewichtung der Lichtanteile dadurch vorgenommen werden, daß die Jalousiefolien 41b und 41c mit den schräggestellten Lamellen 43, 44 unterschiedlich groß gemacht werden. Der Winkelbereich aus dem Licht auf den Detektor gelangen kann, hängt ab von dem Verhältnis aus Lamellenabstand zu Lamellenhöhe.

Während in den Ausführungsbeispielen nach Figur 2 und Figur 3 der Fotodetektor jeweils mit dem Lichtleiter eine Einheit bildet, die so anzuordnen ist, daß sie sowohl die Leuchtdichte im Umfeld vor und im Umfeld hinter dem Fahrzeug erfaßt, kann bei dem Ausführungsbeispiel nach Figur 1 der Fotodetektor an einem beliebigen Ort im Kraftfahrzeug untergebracht sein. Lediglich die Einkoppelflächen der beiden flexiblen Lichtleiter 20 und 21 müssen in der Ebene der Anzeige 16 bzw. in Richtung des Sichtfeldes des Fahrers angeordnet sein. Im Rahmen der Erfindung ist es aber auch möglich, zur Erfassung des Lichtes an der Anzeige 16 und des Lichtes im Umfeld vor dem Kraftfahrzeug zwei Fotodetektoren zu verwenden, deren Signale dann in einer Auswerte- und Steuerschaltung verarbeitet werden. Dabei kann in vorteilhafter Weise ein ohnehin vorhandener Mikroprozessor verwendet werden, der die Helligkeit der Anzeige derart steuert, daß die Kontraständerung der Anzeige durch Auflicht und die Helligkeit im Sichtfeld des Fahrers unabhängig voneinander nach getrennten, im Mikroprozessor gespeicherten Kennlinien berücksichtigt wird.

Bei Anzeigen mit nicht aktiven oder quasiaktiven Anzeigeelementen wie LCD-Anzeigen oder Zeigerinstrumenten erfolgt die Steuerung der Helligkeit an der Anzeige durch zusätzliche direkte oder indirekte Beleuchtungen. In diesem Fall wird der Lampenstrom zur Steuerung der Anzeigehelligkeit geändert.

**Patentansprüche**

1. Anzeigevorrichtung in Kraftfahrzeugen mit einer Steuerung der Helligkeit der Anzeige abhängig von dem aus dem Beobachtungsraum auf die Anzeige gelangenden Licht, dadurch gekennzeichnet, daß außerdem ein die Leuchtdichte des Umfeldes in Blickrichtung des Fahrers (15) erfassender Fotodetektor (19) vorgesehen ist, der abhängig davon die Helligkeit der Anzeige (16) über eine Steuerschaltung (17) nachführt.

2. Anzeigevorrichtung nach Anspruch 1, dadurch gekennzeichnet, daß der Fotodetektor (19) über Lichtleiter (20, 21, 30, 40) sowohl das vom Beobachtungsraum (14) in Richtung (13) der Anzeige (16) einfallende Licht als auch das vom Umfeld vor dem Fahrzeug (10) in Richtung (22) des Fahrers (15) einfallende Licht erfaßt.

3. Anzeigevorrichtung nach Anspruch 2, dadurch gekennzeichnet, daß ein im Bereich der Anzeige (16) endender mit einem im Bereich der Windschutzscheibe (23) endenden Lichtleiter (20, 21) an der lichtempfindlichen Fläche eines Fotodetektors (19) zusammengeführt ist.

4. Anzeigevorrichtung nach Anspruch 2, dadurch gekennzeichnet, daß der Fotodetektor (30, 40) im Bereich der Armaturenabdeckung des Kraftfahrzeuges (10) hinter der Windschutzscheibe (23) angeordnet und an seiner lichtempfindlichen Fläche von einem Lichtleiter (31, 41) abgedeckt ist, der in Achsrichtung des Fahrzeuges (10) ausgerichtet ist.

5. Anzeigevorrichtung nach Anspruch 4, dadurch gekennzeichnet, daß der Lichtleiter (31) einen in Achsrichtung des Fahrzeuges (10) ausgerichteten, stabförmigen Abschnitt (32) hat, welcher mit Ausnahme seiner beiden Stirnflächen (32a) gegen Lichteinfall geschützt ist.

6. Anzeigevorrichtung nach Anspruch 5, dadurch gekennzeichnet, daß der Lichtleiter (31) mit Ausnahme seiner beiden Stirnflächen (32a) und seiner Auflagefläche am Fotodetektor (30) schwarz eingefärbte Deckflächen (33) hat.

7. Anzeigevorrichtung nach Anspruch 4, dadurch gekennzeichnet, daß in dem stabförmigen, in Achsrichtung des Fahrzeuges (10) horizontal ausgerichteten Lichtleiter (41) Lamellen (42, 43, 44) so eingebettet sind, daß sie nur solches Licht zum Fotodetektor (40) durchlassen, welches von oben gesehen in einem Winkelbereich nach vorn und/oder einem Winkelbereich nach hinten geneigt auf den Lichtleiter (41) auftrifft.

8. Anzeigevorrichtung nach Anspruch 7, dadurch gekennzeichnet, daß die obere Hälfte (41a) des stabförmigen Lichtleiters (41) mit Abstand parallel angeordnete, senkrecht liegende und in Achsrichtung des Fahrzeuges (10) verlaufende Lamellen (42) aufweist.

9. Anzeigevorrichtung nach Anspruch 8, dadurch gekennzeichnet, daß die untere Hälfte des stabförmigen Lichtleiters (41) im vorderen Bereich (41b) mit parallel angeordneten, unter einem Winkel ($\alpha$) aus der Senkrechten (46) nach vorn geneigten, quer zur Achsrichtung des Lichtleiters (41) verlaufende Lamellen (43) versehen ist.

10. Anzeigevorrichtung nach Anspruch 9, dadurch gekennzeichnet, daß die untere Hälfte des stabförmigen Lichtleiters (41) im hinteren Bereich (41c) mit parallel angeordneten, unter einem Winkel ($\beta$) aus der Senkrechten (46) nach hinten geneigten, quer zur Achsrichtung des Lichtleiters (41) verlaufenden Lamellen (44) versehen ist.

**Revendications**

1. Dispositif d'affichage sur des véhicules automobiles comprenant une commande de la luminosité de l'affichage en fonction de la lumière provenant de l'emplacement d'observation sur l'affichage, caractérisé en ce qu'il est prévu par ailleurs un photodétecteur (19) captant la brillance du champ environnant en direction du regard du conducteur (15), en fonction de laquelle la luminosité de l'affichage (16) est réglée au moyen d'un circuit de commande (17).

2. Dispositif d'affichage selon la revendication 1, caractérisé en ce que le photodétecteur (19) capte au moyen de conducteurs de lumière (20, 21, 30, 40) aussi bien la lumière incidente en direction (13) de l'affichage (16) qui provient de l'emplacement d'observation (14) que la lumière provenant du champ environnant devant le véhicule (10) en direction (22) du conducteur (15).

3. Dispositif d'affichage selon la revendication 2, caractérisé en ce qu'un guide de lumière (20, 21) s'achevant dans la région de l'affichage (16) est réuni à un guide de lumière s'achevant dans la région du pare-brise (23) sur la surface sensible à la lumière d'un photodétecteur (19).

4. Dispositif d'affichage selon la revendication 2, caractérisé en ce que le photodétecteur (30, 40) est disposé dans la région du revêtement du tableau de bord du véhicule (10) derrière le pare-brise (23) et est recouvert sur sa surface sensible à la lumière par un guide de lumière (31, 41), qui est aligné suivant la direction de l'axe du véhicule (10).

5. Dispositif d'affichage selon la revendication 4, caractérisé en ce que le guide de lumière (31) a une partie (32) en forme de barre alignée suivant la direction de l'axe du véhicule, qui est protégée contre la lumière incidente à l'exception de ses deux faces frontales (32a).

6. Dispositif d'affichage selon la revendication 5, caractérisé en ce que les surfaces de recouvrement (33) du guide de lumière (31) sont teintées en noir, à l'exception de ses faces frontales (32a) et de sa surface d'appui sur le photodétecteur (30).

7. Dispositif d'affichage selon la revendication 4, caractérisé en ce que sont insérées dans le guide de lumière (41) aligné horizontalement dans la direction de l'axe du véhicule (10) des lamelles (42, 43, 44) qui ne laissent passer jusqu'au photodétecteur (40) que la lumière qui, vue d'en haut, atteint le guide de lumière (41) dans un secteur angulaire incliné vers l'avant et/ou un secteur angulaire incliné vers l'arrière.

8. Dispositif d'affichage selon la revendication 7, caractérisé en ce que la moitié supérieure (41a) du guide de lumière (41) en forme de barre présente des lamelles (42) disposées parallèlement avec un certain intervalle, placées verticalement et s'étendant dans la direction de l'axe du véhicule (10).

9. Dispositif d'affichage selon la revendication 8, caractérisé en ce que la moitié inférieure du guide de lumière (41) en forme de barre est pourvue dans sa région avant (41b) de lamelles (43) disposées parallèlement, inclinées vers l'avant en formant un angle (α) avec la verticale (46) et s'étendant transversalement à la direction de l'axe du guide de lumière (41).

10. Dispositif d'affichage selon la revendication 9, caractérisé en ce que la moitié inférieure du guide de lumière (41) en forme de barre est pourvue dans sa région arrière (41c) de lamelles (44) disposées parallèlement, inclinées vers l'arrière en formant un angle (β) avec la verticale (46) et s'étendant transversalement à la direction de l'axe du guide de lumière (41).

**Claims**

1. Display device in motor vehicles having a control of the brightness of the display dependent on the light passing to the display from the observation space, characterized in that, additionally, a photoconductive detector (19) recording the luminance of the surroundings in the direction of vision of the driver (15) is provided, which photoconductive detector resets the brightness of the display (16) via a control circuit (17) dependent on said luminance.

2. Display device according to Claim 1, characterized in that the photoconductive detector (19) records via light pipes (20, 21, 30, 40) both the incident light passing from the observation space (14) in the direction (13) of the display (16) and the incident light passing from the surroundings in front of the vehicle (10) in the direction (22) of the driver (15).

3. Display device according to Claim 2, characterized in that a light pipe (20, 21) ending in the region of the display (16) is joined to a light pipe (20, 21) ending in the region of the windscreen (23) on the light-sensitive surface of a photoconductive detector (19).

4. Display device according to Claim 2, characterized in that the photoconductive detector (30, 40) is arranged behind the windscreen (23) in the region of the instrument panel cover of the motor vehicle (10) and is covered on its light-sensitive surface by a light pipe (31, 41) which is aligned in the axial direction of the vehicle (10).

5. Display device according to Claim 4, characterized in that the light pipe (31) has a bar-shaped section (32) aligned in the axial direction of the vehicle (10), which section is protected from light incidence with the exception of its two end faces (32a).

6. Display device according to Claim 5, characterized in that the light pipe (31), with the exception of its two end faces (32a) and its contact surface on the photoconductive detector (30) has covering surfaces (33) coloured black.

7. Display device according to Claim 4, characterized in that lamellae (42, 43, 44) are embedded in the bar-shaped light pipe (41), which is aligned horizontally in the axial direction of the vehicle (10), in such a way that they only allow that light through to the photoconductive detector (40) which, seen from above, meets the light pipe (41) in an angular range inclined forwards and/or in an angular range inclined backwards.

8. Display device according to Claim 7, characterized in that the top half (41a) of the bar-shaped light pipe (41) has lamellae (42) arranged with spacing in parallel, lying vertically and extending in the axial direction of the vehicle (10).

9. Display device according to Claim 8, characterized in that the bottom half of the bar-shaped light pipe (41) is provided in the front region (41b) with lamellae (43) arranged in parallel, inclined forwards at an angle (α) to the vertical plane (46) and extending transversely to the axial direction of the light pipe (41).

10. Display device according to Claim 9, characterized in that the bottom half of the bar-shaped light pipe (41) is provided in the rear region (41c) with lamellae (44) arranged in parallel, inclined backwards at an angle ($\beta$) to the vertical plane (46) and extending transversely to the axial direction of the light pipe (41).

Fig. 1

Fig. 2

Fig. 3